# DEMANDE DE BREVET EUROPEEN

(11) **EP 2 405 209 A1**
(43) Date de publication de la demande: **11.01.2012**
(21) Numéro de dépôt: 11171139.6
(22) Date de dépôt: 23.06.2011
(51) Int. Cl.: F24F 5/00, F24F 13/04, F25B 47/00, F25D 21/04, F25D 21/12, F28C 3/02, F28D 7/16, F28F 19/00

(54) **Dispositif d'admission et de mixage d'air pour pompe à chaleur**

(30) Priorité: 06.07.2010 FR 1002843
(71) Demandeur: Synergie Protect Climatisation, 56220 Rochefort-en-Terre (FR)
(72) Inventeur: Goetinck, Hervé Jean, 56330 Pluvigner (FR)
(74) Mandataire: Hays, Bertrand

(57) **Abrégé**

L'invention concerne un dispositif d'admission d'air destiné à être monté sur l'entrée d'air d'une pompe à chaleur. Il comprend principalement une enceinte (1) ayant une paroi avant (10) et une paroi arrière (11) disposée contre l'entrée d'air de la pompe à chaleur. Cette enceinte comprend une pluralité de tubulures (2) montées entre la paroi avant (10) et la paroi arrière (11) de l'enceinte. Chaque tubulure définit un passage interne dans lequel circule un flux d'air extérieur. L'enceinte comprend également une entrée (18) pour recevoir un flux d'air tempéré et une sortie pour évacuer ledit flux, l'entrée et la sortie étant disposées de manière à ce que le flux d'air tempéré circule entre les tubulures dans l'enceinte. Le flux d'air tempéré contribue ainsi en période hivernale à réchauffer le flux d'air extérieur avant que celui-ci ne soit admis dans la pompe à chaleur. Ceci permet d'éviter des cycles de dégivrage intempestifs de la pompe à chaleur.

## Description

La présente invention concerne un dispositif d'admission d'air destiné à être monté sur l'entrée d'air d'une pompe à chaleur air/air ou air/eau. Ce dispositif est destiné à améliorer les performances énergétiques de la pompe à chaleur.

Les pompes à chaleur sont connues pour être une alternative aux systèmes de production de chaleur traditionnels tels que les convecteurs électriques. Ce sont des appareils thermodynamiques permettant de transférer de la chaleur d'un milieu froid vers un milieu chaud. La pompe à chaleur extrait des calories du milieu froid (source froide) pour les restituer au milieu chaud. En période hivernale, les calories sont extraites de l'air extérieur et sont restituées à l'air intérieur. En période estivale, c'est l'inverse.

Ces pompes à chaleur qui utilisent comme source froide l'air extérieur ne sont toutefois pas très performantes les jours de grand froid, période où les besoins en chauffage sont les plus importants. Le système de chauffage est habituellement complété par un chauffage d'appoint, classiquement un chauffage électrique, pour couvrir l'ensemble des besoins en chauffage sur cette période, ce qui alors réduit les performances globales du système de chauffage. Par ailleurs, des cycles de dégivrage de la pompe à chaleur sont généralement nécessaires lorsque la température extérieure est négative afin d'éviter la formation de givre sur l'échangeur extérieur, ce qui contribue encore à réduire les performances du système.

Pour faire face à ces périodes de grand froid, il est connu de par le brevet FR 2 916 040 d'alimenter la pompe à chaleur avec de l'air provenant d'une source d'air tempéré, par exemple un sous-sol ou un puits canadien. Dans ce document, il est proposé de disposer la pompe à chaleur dans une grande boîte étanche de forme cubique et d'alimenter cette boîte avec de l'air tempéré provenant d'un sous-sol, d'une VMC (pour Ventilation mécanique Contrôlée) ou d'un puits canadien. Ce système présente toutefois les inconvénients suivants:
- il est difficilement adaptable sur une pompe à chaleur existante;
- la pompe étant essentiellement alimentée par de l'air tempéré, il est préférable que la boîte soit raccordée à plusieurs sources tempérées (sous-sol, VMC, puits canadien) pour que la pompe à chaleur puisse recevoir suffisamment d'air,
- le dispositif est encombrant et l'étanchéité de la boîte est difficile à réaliser.

Le but de la présente invention est de proposer une solution visant à pallier toute ou partie des inconvénients précités.

L'invention a pour objet un dispositif d'admission d'air destiné à être monté sur l'entrée d'air d'une pompe à chaleur et comprenant une enceinte ayant une paroi avant, au moins une paroi latérale et une paroi arrière destinée à être disposée contre l'entrée d'air de la pompe à chaleur,
ladite enceinte comprenant:
- une pluralité de premières tubulures montées entre la paroi avant ou la paroi latérale et la paroi arrière de l'enceinte, chaque première tubulure définissant un passage interne dans lequel circule un premier flux d'air ayant une première température et comprenant une première extrémité débouchant sur la face extérieure de la paroi avant et une deuxième extrémité débouchant sur la face extérieure de la paroi arrière, et
- une entrée pour recevoir un deuxième flux d'air ayant une deuxième température et une sortie pour évacuer ledit deuxième flux d'air, l'entrée et la sortie étant disposées de manière à ce que le deuxième flux d'air circule entre les premières tubulures dans l'enceinte.

Selon l'invention, le premier flux d'air échange des calories avec le deuxième flux d'air dans l'enceinte du dispositif avant d'être fourni à la pompe à chaleur. Ainsi, si la température du premier flux d'air est inférieure à celle du deuxième flux d'air, le premier flux d'air est réchauffé par le second flux d'air à l'intérieur de l'enceinte avant d'être fourni à la pompe à chaleur. A l'inverse, si la température du premier flux d'air est supérieure à celle du deuxième flux d'air, le premier flux d'air est rafraichi par le second flux d'air.

Le premier flux d'air est par exemple de l'air extérieur et le deuxième flux d'air est de l'air plus tempéré provenant d'un puits canadien et/ou d'un vide sanitaire et/ou d'une cave et/ou d'une VMC et/ou d'un sous-sol et/ou d'un capteur à air solaire. En période hivernale, le flux d'air tempéré contribue ainsi à réchauffer le flux d'air extérieur et, en période estivale, le flux d'air tempéré contribue à rafraichir le flux d'air extérieur. En période hivernale, le dispositif de l'invention permet à la pompe à chaleur de ne pas givrer lorsque la température extérieure est négative.

Dans un mode de réalisation préféré, la sortie du deuxième flux d'air est également disposée sur la paroi arrière de l'enceinte. Ainsi, le deuxième flux d'air, après avoir circulé dans l'enceinte et avoir échangé des calories avec le premier flux d'air, est également fourni à la pompe à chaleur, ce qui contribue encore à augmenter le rendement global du système de chauffage.

Dans un mode de réalisation particulier, les premières tubulures sont disposées en quinconce entre les parois avant et arrière de l'enceinte de manière à ce que le deuxième flux d'air puisse facilement circuler entre elles. Cela contribue à augmenter le transfert de calories entre les deux flux.

Dans un mode de réalisation particulier, la sortie du deuxième flux d'air est composée d'une pluralité d'ouvertures ménagées dans la paroi arrière de l'enceinte, les ouvertures étant disposées à proximité des deuxièmes extrémités des premières tubulures. Ces ouvertures sont de préférence disposées en quinconce sur la paroi arrière.

De façon avantageuse, l'enceinte comporte également des deuxièmes tubulures définissant chacune un passage interne pour le deuxième flux d'air, le passage interne ayant une première extrémité présente à l'intérieur de l'enceinte et une deuxième extrémité raccordée à la paroi arrière de manière à déboucher sur la face extérieure de la plaque arrière via l'une desdites ouvertures. Selon un mode de réalisation particulier, la longueur de chaque deuxième tubulure dépend de sa position verticale sur la paroi arrière de l'enceinte. Avantageusement, la longueur des deuxièmes tubulures croît de bas en haut. Par ailleurs, l'extrémité libre des deuxièmes tubulures est de préférence biseautée pour faciliter l'entrée du deuxième flux dans les deuxièmes tubulures.

Dans un mode de réalisation particulier, l'enceinte est de forme générale parallélépipédique et comprend, outre ladite paroi avant et ladite paroi arrière, deux parois latérales sensiblement verticales et deux parois latérales sensiblement horizontales, dites paroi latérale inférieure et paroi latérale supérieure. L'entrée destinée à recevoir le deuxième flux d'air est de préférence montée sur la paroi latérale inférieure de l'enceinte.

Le dispositif comprend en outre un tube d'alimentation connecté par une première extrémité à l'entrée de l'enceinte et par une deuxième extrémité à une source d'alimentation du deuxième flux d'air.

Dans un mode de réalisation particulier, le tube d'alimentation est équipé d'un dispositif de chauffage pour chauffer le deuxième flux d'air. Il est également équipé d'un ventilateur pour faire circuler ledit deuxième flux d'air dans le tube d'alimentation.

L'invention sera mieux comprise, et d'autres buts, détails, caractéristiques et avantages apparaîtront plus clairement au cours de la description explicative détaillée qui va suivre, en se référant ci-dessous aux dessins annexés, parmi lesquels:
- la figure 1 représente une vue éclatée en perspective d'un dispositif conforme à l'invention,
- la figure 2 représente une vue de la face avant du dispositif de la figure 1;
- la figure 3 représente une vue de la face arrière du dispositif de la figure 1;
- la figure 4 représente une vue schématique agrandie et en coupe selon le plan A-A défini sur la figure 3 du dispositif de l'invention;
- la figure 5 représente une vue de côté partielle du dispositif de la figure 1; et
- la figure 6 représente une vue schématique en coupe selon le plan B-B défini à la figure 5 du dispositif de l'invention.

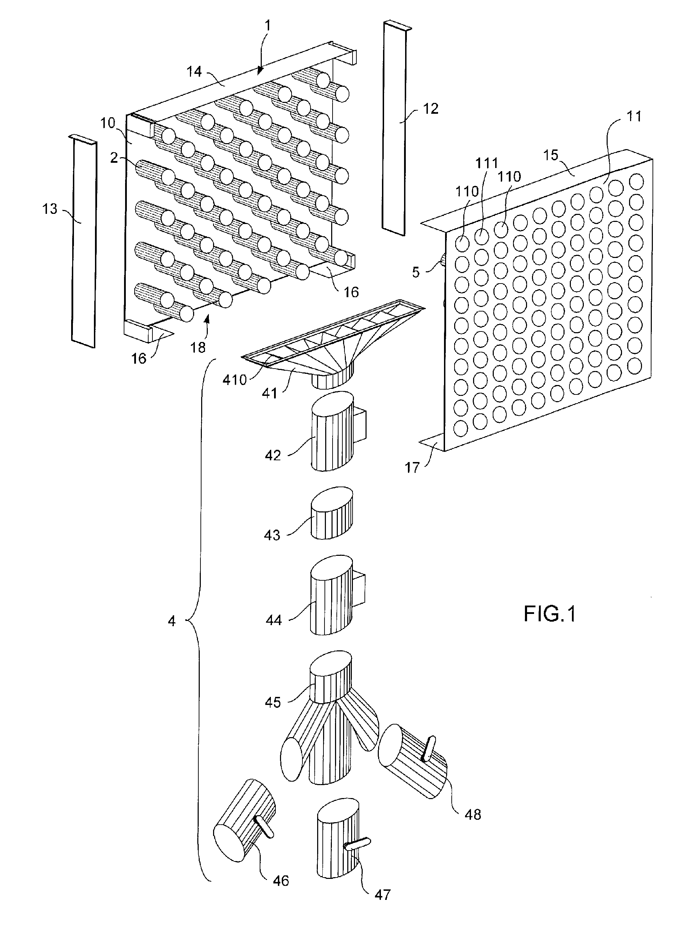

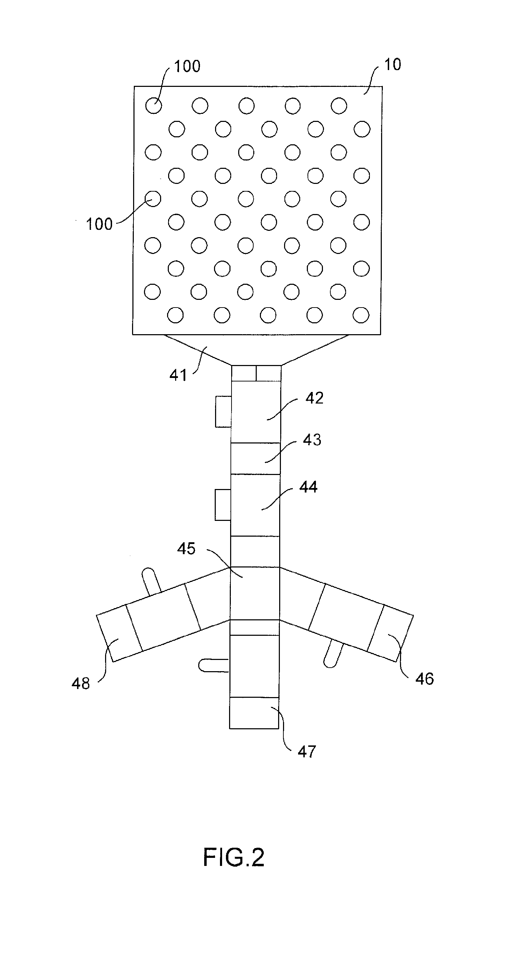

En référence aux figures 1 à 6, le dispositif de l'invention comprend une enceinte 1 de forme générale parallélépipédique comportant une paroi avant formée d'une plaque avant 10, une paroi arrière formée d'une plaque arrière 11 et des parois latérales. Les parois latérales verticales de l'enceinte sont formées par des plaques 12 et 13 de préférence amovibles. La paroi latérale supérieure est formée par deux plaques, l'une 14 s'étendant perpendiculairement à partir de la plaque avant 10 et l'autre 15 s'étendant perpendiculairement à partir de la plaque arrière 11, lesdites plaques 14 et 15 étant superposées lorsque l'enceinte est montée. De même, la paroi latérale inférieure est formée par deux plaques, l'une 16 s'étendant perpendiculairement à partir de la plaque avant 10 et l'autre 17 s'étendant perpendiculairement à partir de la plaque arrière 11, lesdites plaques 16 et 17 étant superposées lorsque l'enceinte est montée. Une ouverture 18 est ménagée dans les deux plaques 16 et 17 pour permettre l'entrée d'un flux d'air F2 dans l'enceinte.

Le dispositif est destiné à être disposé par sa paroi arrière 11 contre l'entrée d'air d'une pompe à chaleur. Le dispositif est fixé par des moyens appropriés, par exemple des pattes, sur cette entrée d'air.

L'enceinte 1 est équipée de tubulures 2 de forme cylindrique montées entre la plaque avant 10 et la plaque arrière 11. Chacune de ces tubulures définit un passage interne à travers laquelle circule un flux d'air F1 provenant de l'extérieur. Chaque tubulure 2 est fixée par une première extrémité à la plaque avant 10 et débouche, au niveau de cette première extrémité, sur la face extérieure de la plaque avant 10 via une ouverture circulaire 100 ménagée dans la plaque avant. La première extrémité des tubulures 2 est par exemple soudée à la plaque avant 10. La deuxième extrémité de la tubulure 2 est assemblée à la plaque arrière 11 par des moyens appropriés et débouche sur la face extérieure de la plaque arrière 11 via une ouverture circulaire 110 ménagée dans la plaque arrière. La deuxième extrémité est par exemple emboitée dans une ouverture 110 de la plaque arrière, le diamètre externe de la tubulure au niveau de sa deuxième extrémité étant alors sensiblement égal au diamètre de l'ouverture 110.

Les tubulures 2 sont avantageusement disposées en quinconce.

L'enceinte 1 comporte également une entrée 18 pour recevoir un deuxième flux d'air F2 et une sortie pour évacuer ce flux. L'entrée 18 est réalisée par une ouverture ménagée dans les plaques 16 et 17 de la paroi latérale inférieure. La sortie du flux F2 est réalisée par une pluralité d'ouvertures 111 ménagées dans la plaque arrière 11. Le flux d'air F2 rentre ainsi dans l'enceinte par l'entrée 18, circule entre les tubulures 2 et ressort de l'enceinte par les ouvertures 111.

Le flux d'air F2 provient d'une source tempérée, par exemple un vide sanitaire, un puits canadien, une cave, un sous-sol, une VMC ou équivalents. Ainsi, lorsque le flux d'air F2 est en contact avec les tubulures 2, il échange des calories avec le flux d'air F1 circulant dans les tubulures 2. Les parois et les tubulures de l'enceinte sont réalisées en un matériau conducteur de chaleur, de préférence inoxydable, tel que de l'aluminium ou de l'inox.

Les ouvertures 111 sont disposées sur toute la surface de la paroi arrière et à proximité des ouvertures 110. Elles sont de préférence disposées en quinconce. Les ouvertures 110 étant également disposées en quinconce, il en résulte que la paroi arrière 11 comporte une pluralité d'ouvertures 110 et 111 organisées en lignes et en rangées, chaque ligne ou rangée comprenant en alternance des ouvertures 110 et des ouvertures 111.

L'enceinte 1 est alimentée en flux d'air F2 par un tube d'alimentation 4 raccordé par une première extrémité à l'entrée 18 et par une deuxième extrémité à une ou plusieurs sources d'air tempéré. Dans l'exemple présenté ici, le tube d'alimentation 4 est raccordé à trois sources d'air tempéré, via trois tubes d'arrivée d'air 46, 47, 48.

Le tube d'alimentation 4 comporte, dans le sens inverse de circulation du flux F2, un embout 41 en forme d'éventail, une portion de tube 42 équipée d'un dispositif de chauffage 420, un raccord tubulaire 43, une portion de tube 44 équipée d'un ventilateur 440, un té à quatre voies 45 dont l'une des voies est raccordée à la portion de tube 44 et les autres voies sont raccordées aux trois tubes d'arrivée d'air 46, 47, 48. Chacun des tubes d'arrivée d'air 46, 47, 48 est équipé d'une électrovanne pour autoriser ou non le passage d'air dans le tube.

Le dispositif de chauffage 420 est par exemple constitué par des résistances électriques. Il est avantageusement alimenté en énergie électrique par un panneau solaire ou une éolienne.

Le ventilateur 440 a pour fonction de générer le flux d'air F2 à partir d'air provenant des sources d'air tempéré. Il est à noter que, si l'un des tubes d'arrivée d'air 46-48 est raccordé à un conduit de VMC, ce ventilateur peut faire office de ventilateur de VMC. Le ventilateur qui est classiquement monté sur le conduit de VMC peut alors être supprimé.

L'embout 41 en forme d'éventail est muni de sept lames 410 internes disposées en éventail divisant le passage interne de l'embout en sept compartiments orientant chacun une partie du flux F2 vers une zone particulière de l'enceinte. Ces lames contribuent à mieux diffuser le flux F2 au sein de l'enceinte.

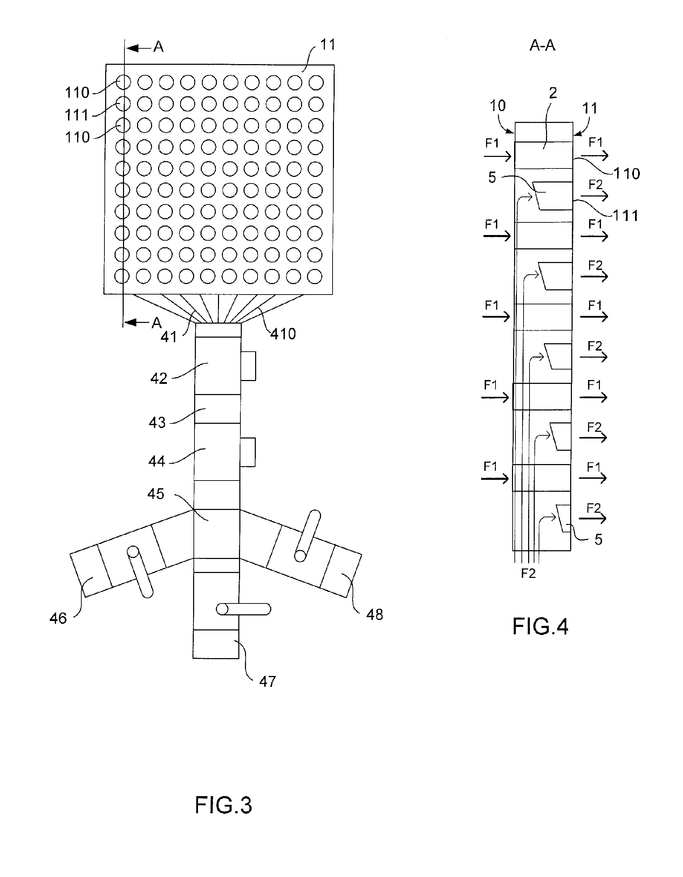

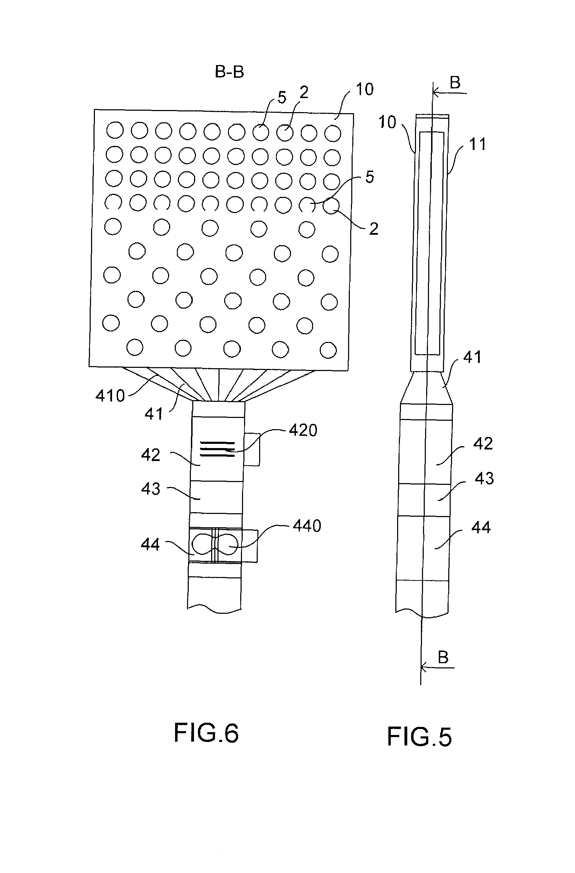

Comme montré plus particulièrement sur les figures 4 et 6, d'autres tubulures, référencées 5, sont prévues à l'intérieur de l'enceinte. Les tubulures 5 ont une première extrémité fixée, par exemple par soudage, sur la plaque arrière 11 et une deuxième extrémité libre disposée à l'intérieur de l'enceinte. La première extrémité de chacune des tubulures 5 est fixée à la plaque arrière de sorte que son passage interne débouche sur la face extérieure de la plaque arrière via une ouverture 111.

La longueur de chacune des tubulures 5 dépend de sa position verticale sur la plaque arrière 11. Cette longueur croît de bas en haut, c'est-à-dire que la longueur des tubulures 5 d'une rangée donnée est supérieure à la longueur des tubulures 5 de la rangée placée immédiatement en dessous. Cette longueur variable des tubulures 5 permet d'éviter que le flux d'air F2 tempéré, dont la tendance naturelle est de monter, soit essentiellement évacué par les tubulures des rangées supérieures. On obtient ainsi une évacuation sensiblement uniforme du flux d'air F2 à travers toutes les ouvertures 111 de la plaque arrière.

Par ailleurs, l'extrémité libre des tubulures 5 est de préférence biseautée pour favoriser l'entrée du flux d'air F2 dans le passage interne de la tubulure.

Le fonctionnement du dispositif est décrit ci-après. Le flux F1 est un flux d'air provenant de l'extérieur. Il traverse l'enceinte en circulant dans les tubulures 2 avant d'être fourni à la pompe à chaleur. Il est à noter qu'une grille de protection peut être montée sur la plaque avant 10 pour éviter que des impuretés, telles que des feuilles ou des branches, ne viennent obstruer le passage interne des tubulures 2 et n'entraînent une diminution des performances du système.

Le flux F2 est un flux d'air plus tempéré. Ce flux circule dans l'enceinte entre les tubulures 2. Ce flux est amené dans l'enceinte par le ventilateur 440. Ce flux rentre dans l'enceinte par l'entrée 18 puis ressort de celle-ci par les ouvertures 111 via les tubulures 5 avant d'être délivré à la pompe à chaleur. Lorsque les deux flux F1 et F2 ont des températures différentes, ce qui est généralement le cas, un transfert de calories s'opère dans l'enceinte entre les deux flux au travers des tubulures 2.

En période estivale, le flux F1 présentant une température supérieure à celle du flux F2, le transfert de calories se fait du flux F1 vers le flux F2, ce dernier contribuant alors à rafraîchir le flux F1 avant son arrivée dans la pompe à chaleur. Pendant cette période, le tube d'alimentation 4 est avantageusement raccordé à un puits canadien, et/ou un vide sanitaire et/ou un sous-sol.

En période hivernale, le flux F1 présentant une température inférieure à celle du flux F2, le transfert de calories se fait du flux F2 vers le flux F1, ce dernier contribuant alors à réchauffer le flux F1 avant son arrivée dans la pompe à chaleur. Cela permet de réduire, voire supprimer, les cycles de dégivrage habituellement nécessaires en cas de températures négatives et, de ce fait, de réduire la consommation électrique de la pompe à chaleur. On évite également tout problème lié au gel qui pourrait entrainer un arrêt total de la pompe à chaleur. Le flux F2 étant également fourni à la pompe à chaleur, il contribue aussi à améliorer le rendement global du système de chauffage. Pendant cette période hivernale, le tube d'alimentation 4 est avantageusement raccordé à une conduite de VMC ou à capteur solaire à air pour avoir un apport important de calories.

Selon un mode de fonctionnement particulier, si la température extérieure passe en dessous de 1°C, le dispositif de chauffage 420 se met en marche pour réchauffer le flux F2 et augmenter l'échange de calories entre les flux F1 et F2. Le dispositif de chauffage est relié à une sonde de température, placée à l'extérieur du dispositif, pour mesurer la température extérieure.

Le dispositif de l'invention a pour avantage d'être simple et rapide à installer sur une pompe à chaleur existante. Le rendement d'une pompe à chaleur équipée d'un tel dispositif est très intéressant. Pour un kilowatt consommé, la pompe à chaleur ainsi équipée peut restituer entre 3 et 4 kilowatts. Les économies en termes de consommation électrique par rapport à un système de chauffage traditionnel peuvent atteindre 60%.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention. La forme de l'enceinte et la section des tubulures 2 ou 5 peuvent être modifiées. On pourrait par exemple envisager une enceinte de forme cylindrique ou des tubulures de section rectangulaire. On pourrait également envisager un dispositif dans lequel les tubulures s'étendent entre une paroi latérale de l'enceinte et la paroi arrière.

## Revendications

1. Dispositif d'admission d'air destiné à être monté sur l'entrée d'air d'une pompe à chaleur **caractérisé en ce qu'**il comprend une enceinte (1) ayant une paroi avant (10), au moins une paroi latérale (12 à 17) et une paroi arrière (11) destinée à être disposée contre l'entrée d'air de la pompe à chaleur,
ladite enceinte comprenant:
- une pluralité de premières tubulures (2) montées entre la paroi avant (10) ou la paroi latérale et la paroi arrière (11) de l'enceinte, chaque première tubulure définissant un passage interne dans lequel circule un premier flux d'air (F1) ayant une première température et comprenant une première extrémité débouchant sur la face extérieure de la paroi avant et une deuxième extrémité débouchant sur la face extérieure de la paroi arrière, et
- une entrée (18) pour recevoir un deuxième flux d'air (F2) ayant une deuxième température et une sortie pour évacuer ledit deuxième flux d'air, l'entrée et la sortie étant disposées de manière à ce que le deuxième flux d'air circule entre les premières tubulures dans l'enceinte.

2. Dispositif selon la revendication 1, **caractérisé en ce que** le premier flux d'air est de l'air extérieur et le deuxième flux d'air est de l'air tempéré.

3. Dispositif selon la revendication 1 ou 2, **caractérisé en ce que** la sortie du deuxième flux d'air est disposée sur la paroi arrière de l'enceinte.

4. Dispositif selon la revendication 3, **caractérisé en ce que** les premières tubulures sont disposées en quinconce entre les parois avant et arrière de l'enceinte.

5. Dispositif selon la revendication 3 ou 4, **caractérisé en ce que** la sortie du deuxième flux d'air comporte une pluralité d'ouvertures (111) ménagées dans la paroi arrière de l'enceinte, les ouvertures étant disposées à proximité des deuxièmes extrémités des premières tubulures.

6. Dispositif selon la revendication 5, **caractérisé en ce que** lesdites ouvertures (111) sont disposées en quinconce.

7. Dispositif selon la revendication 5 ou 6, **caractérisé en ce que** ladite enceinte comporte en outre des deuxièmes tubulures (5) définissant chacune un passage interne pour le deuxième flux d'air, ledit passage interne ayant une première extrémité présente à l'intérieur de l'enceinte et une deuxième extrémité raccordée à la paroi arrière de manière à déboucher sur la face extérieure de la plaque arrière via l'une desdites ouvertures (111).

8. Dispositif selon la revendication 7, **caractérisé en ce que** la première extrémité du passage interne de chacune des deuxièmes tubulures (5) est biseautée.

9. Dispositif selon la revendication 7 ou 8, **caractérisé en ce que** la longueur de chacune des deuxièmes tubulures (5) dépend de sa position verticale sur la paroi arrière de l'enceinte.

10. Dispositif selon l'une quelconque des revendications précédentes, **caractérisé en ce que** l'enceinte est de forme générale parallélépipédique, et comprend, outre ladite paroi avant et ladite paroi arrière, deux parois latérales sensiblement verticales et deux parois latérales sensiblement horizontales dites paroi latérale inférieure et paroi latérale supérieure.

11. Dispositif selon la revendication 10, **caractérisé en ce que** l'entrée de l'enceinte destinée à recevoir le deuxième flux d'air est montée sur la paroi latérale inférieure de l'enceinte.

12. Dispositif selon l'une quelconque des revendications précédentes, **caractérisé en ce qu'**il comprend un tube d'alimentation (4) connecté à ladite entrée (18) de l'enceinte par une première extrémité et par une deuxième extrémité à une source d'alimentation du deuxième flux d'air.

13. Dispositif selon la revendication 12, **caractérisé en ce que** le tube d'alimentation est équipé d'un dispositif de chauffage (420) du deuxième flux d'air.

14. Dispositif selon la revendication 12 ou 13, **caractérisé en ce que** le tube d'alimentation est équipé d'un ventilateur (440) pour faire circuler ledit deuxième flux d'air dans le tube d'alimentation.

15. Dispositif selon l'une quelconque des revendications précédentes, **caractérisé en ce qu'**il est réalisé en aluminium.
